# EUROPEAN PATENT APPLICATION

(11) **EP 2 527 971 A2**
(43) Date of publication of application: **28.11.2012**
(21) Application number: 12157242.4
(22) Date of filing: 28.02.2012
(51) Int. Cl.: G06F 9/00

(54) **Application providing system and application providing method**

(30) Priority: 31.03.2011 JP 2011080936; 03.06.2011 JP 2011125701
(71) Applicant: Fujitsu Limited, Kawasaki-shi, Kanagawa 211-8588 (JP)
(72) Inventor: Ito, Hidenobu, Kawasaki-shi, Kanagawa 211-8588 (JP); Nimura, Kazuaki, Kawasaki-shi, Kanagawa 211-8588 (JP); Nakamura, Yousuke, Kawasaki-shi, Kanagawa 211-8588 (JP); Yasaki, Kouichi, Kawasaki-shi, Kanagawa 211-8588 (JP); Guo, Zhaogong, Kawasaki-shi, Kanagawa 211-8588 (JP)
(74) Representative: Hutchison, James

(57) **Abstract**

A communication terminal (4) and a web server (3) that provides a resource of a web application to the communication terminal (4) are provided. The web server (3) includes a storing control unit (24) that stores, when a content edited by a web application that is executed by the communication terminal (4) is detected, the edited content in the resource of the web application. Furthermore, the web server (3) includes an application providing unit (22) that provides, when an application request for the web application is detected from the communication terminal (4), the resource of the web application to the communication terminal (4) that executes the application request.

## Description

### FIELD

The embodiments discussed herein are directed to an application providing system and an application providing method.

### BACKGROUND

In recent years, web applications that provide clients with various applications stored on web servers have become widely known. Thus, even when applications are not installed in the clients, the clients can still execute various processes by using the web applications via online web servers.

Furthermore, in recent years, the hyper text markup language (HTML) 5 has had a web application cache function. In the web application cache function, the clients cache, in application caches in web browsers, all the resources, such as the HTML, a cascading style sheet (CSS), and JavaScript (registered trademark), that are elements constituting the web applications. Then, in accordance with the resources that are cached in the application caches, the clients execute the web applications as local applications even when the clients are offline. Furthermore, after editing the content using the web applications, the clients can store the content in the clients and, when the clients are online, can store the edited content on the servers by uploading the content.
Patent Document 1: Japanese National Publication of International Patent Application No. 2010-508581
Patent Document 2: Japanese National Publication of International Patent Application No. 2007-519071
Patent Document 3: Japanese Laid-open Patent Publication No. 2004-213243
Patent Document 4: Japanese Laid-open Patent Publication No. 2005-107842
Patent Document 5: Japanese Laid-open Patent Publication No. 2003-308210

When referring to manifest files, which contain a list of resources of a web application being described, when there are resources that have been updated on a web server, a web browser usually updates the resources that have been automatically cached. In contrast, a web browser does not automatically update data resources of web applications that are not described in manifests, such as the content files that are created by clients and that are uploaded to web servers. Accordingly, a method is usually used in which, when executing a web application, the web application is described such that the latest contents are acquired from web servers.

However, even if web applications are executed offline, it is not possible for the client to acquire the latest edited content. For example, suppose there were case in which, after editing the content by using a web application, a client edits the edited content by using a web application provided from another terminal. In such a case, even if the client that uses the web application via that terminal executes the web application while offline, the client does not acquire the latest edited content; therefore, each edited content stored in each client terminal differs. Accordingly, it is not possible for the client to re-edit the latest edited content.

Accordingly, it is desirable to provide an application providing system and an application providing method that can acquire the latest edited content at the time of the execution of a web application even when a client is offline.

### SUMMARY

According to an aspect of an embodiment of the invention, an application providing system includes a communication device that includes a processor; and an application providing device that includes a processor and that provides a resource of a web application to the communication device, wherein when the processor in the application providing device detects a content that is edited by the web application executed by the communication device, the processor in the application providing device stores the edited content in the resource of the web application, and, when the processor in the application providing device detects, from the communication device, an application request for the resource of the web application, the processor in the application providing device provides the resource of the web application to the communication device that executes the application request, and when the processor in the communication device receives the resource of the web application from the application providing device, the processor in the communication device temporally stores the resource, synchronizes the stored resource with a cache in a web browser, executes the web application in accordance with the cached resource, and restores the content stored in the resource in accordance with the cached resource.

### BRIEF DESCRIPTION OF DRAWINGS

FIG. 1 is a functional block diagram illustrating an example of the internal configuration of a web application providing system according to a first embodiment;
FIG. 2 is a schematic diagram illustrating an example of an embodiment of the web application providing system;
FIG. 3 is a schematic diagram illustrating an example of the table contents stored in an address management unit;
FIG. 4 is a schematic diagram illustrating an example of a manifest and a resource;
FIG. 5 is a schematic diagram illustrating an example of a usage pattern of the web application providing system according to the first embodiment;
FIG. 6 is a flowchart illustrating a process related to a content update process that is performed by a web server;
FIG. 7 is a flowchart illustrating a process related to an address providing process that is performed by a push server;
FIG. 8 is a flowchart illustrating a process related to a web application acquisition process that is performed by a communication terminal;
FIG. 9 is a sequence diagram illustrating a process for acquiring a resource between a web browser and the web server;
FIG. 10 is a schematic diagram illustrating an example of an embodiment of the web application providing system according to the first embodiment;
FIG. 11 is a functional block diagram illustrating the configuration of a web application providing system according to a second embodiment;
FIG. 12 is a schematic diagram illustrating an example of the table contents stored in an address management table;
FIG. 13 is a flowchart illustrating an example of a process performed by a move source communication terminal;
FIG. 14 is a flowchart illustrating an example of a process related to an address providing process that is performed by a push server;
FIG. 15 is a flowchart illustrating an example of a process performed by a move destination communication terminal;
FIG. 16, comprising Figures 16A and 16B, is a schematic diagram illustrating an example of an interlocking operation of the move source communication terminal and the move destination communication terminal;
FIG. 17 is a schematic diagram illustrating an example of a usage pattern of a web application providing system according to a third embodiment;
FIG. 18 is a functional block diagram illustrating the configuration of a web application providing system according to a fourth embodiment;
FIG. 19 is a schematic diagram illustrating an example of the table contents stored in an address management table;
FIG. 20 is a schematic diagram illustrating an example of the table contents stored in a user management table;
FIG. 21 is a flowchart illustrating a process related to an address providing process specified by a user that is performed by a push server; and
FIG. 22 block diagram illustrating a computer that executes an application providing program.

### DESCRIPTION OF EMBODIMENTS

Preferred embodiments of the present invention will be explained with reference to accompanying drawings.

The present invention is not limited to the embodiments described below.

### [a] First Embodiment

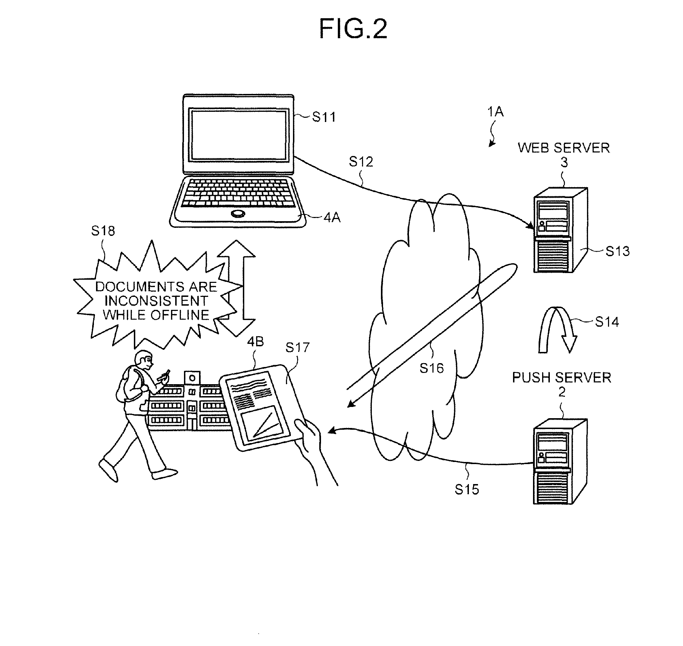

The present inventors have developed a web application providing system for a push system. FIG. 2 is a schematic diagram illustrating an example of an embodiment of the web application providing system. A web application providing system 1A illustrated in FIG. 2 includes a push server 2, a web server 3, a personal computer 4A, and a tablet device 4B. The owner of the personal computer 4A and the tablet device 4B is, for example, the same person.

The personal computer 4A, which is online with the web server 3, acquires, for example, a web application of document creation software from the web server 3 by using a web browser. The personal computer 4A creates and edits the content by using the web application, (Step S11). The personal computer 4A stores the created and edited content locally in the personal computer 4A and uploads the content to the web server 3 (Step S12). Then, the web server 3 stores the content uploaded from the personal computer 4A in association with the web application (Step S13). Accordingly, the same content is stored in the personal computer 4A and the web server 3.

When the push server 2 detects an update of the web application, for example, an update of the edited content (Step S14), the push server 2 performs push transmission by transmitting to, for example, the tablet device 4B an updated storage destination address related to a resource of the web application (Step S15). Then, when receiving the storage destination address, the tablet device 4B acquires the updated resource of the web application from the web server 3 in accordance with the storage destination address (Step S16). The tablet device 4B caches the resource of the web application that is acquired from the web server 3 and executes the web application in accordance with the cached resource (Step S17). Accordingly, the tablet device 4B can locally execute the web application in accordance with the cached resources even when the tablet device 4B is offline.

Furthermore, when the tablet device 4B is online with the web server 3, the tablet device 4B can acquire the latest edited content stored in the web server 3 when the web application is executed. As a result, the same content is stored in the personal computer 4A and the tablet device 4B. However, when the tablet device 4B does not execute the web application when it is online with the web server 3, the tablet device 4B does not acquire the edited content stored in the web server 3. Accordingly, while offline, the edited content locally stored in the personal computer 4A is different from that stored in the tablet device 4B (Step S18); therefore, it is not possible for the tablet device 4B to re-edit the edited content created by the personal computer 4A. Accordingly, the inventors have developed the web application providing system that can acquire the latest edited data when the web application is being executed even if it is offline.

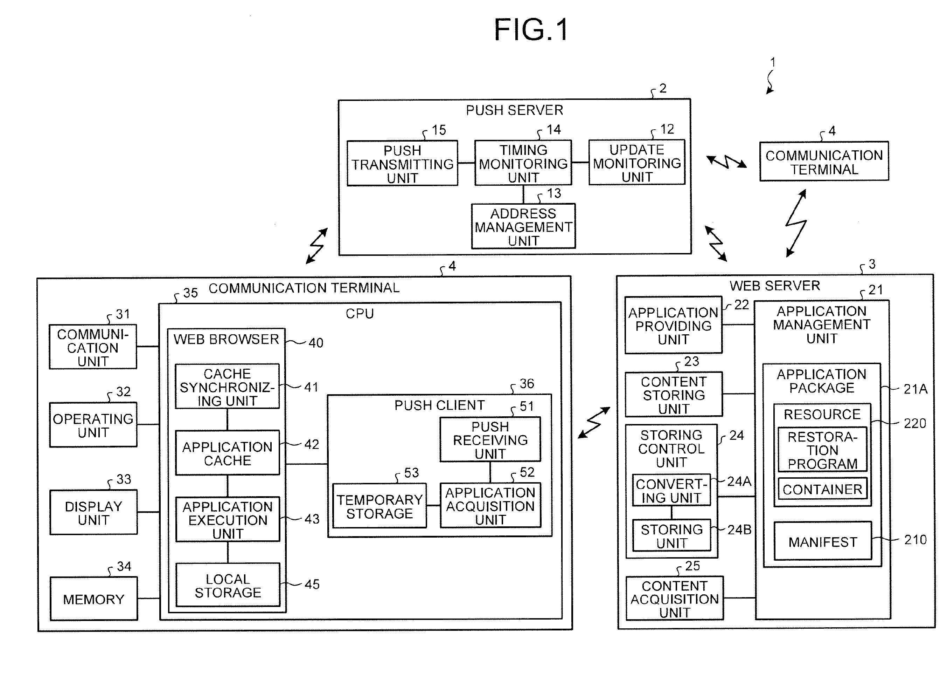

FIG. 1 is a functional block diagram illustrating an example of the internal configuration of a web application providing system according to a first embodiment. Elements that have the same configuration as those in the web application providing system 1A illustrated in FIG. 2 are assigned the same reference numerals; therefore, a description thereof is omitted. A web application providing system 1 illustrated in FIG. 1 includes the push server 2, the web server 3, and the communication terminal 4. The push server 2, the web server 3, and the communication terminal 4 are connected via a communication network, such as wireless communication, wired communication, or the like. The push server 2 includes an update monitoring unit 12, an address management unit 13, a timing monitoring unit 14, and a push transmitting unit 15. The resources are elements constituting the web application, such as the HTML, the CSS, and JavaScript. The update monitoring unit 12 monitors the update status of web applications by communicating with the web server 3. The update status of the web applications also includes an update of edited data edited using the web application. Furthermore, the update monitoring unit 12 may also access a database that manages, in a centralized manner, the update status of the web application stored in each web server 3 and monitor the update status of the web application.

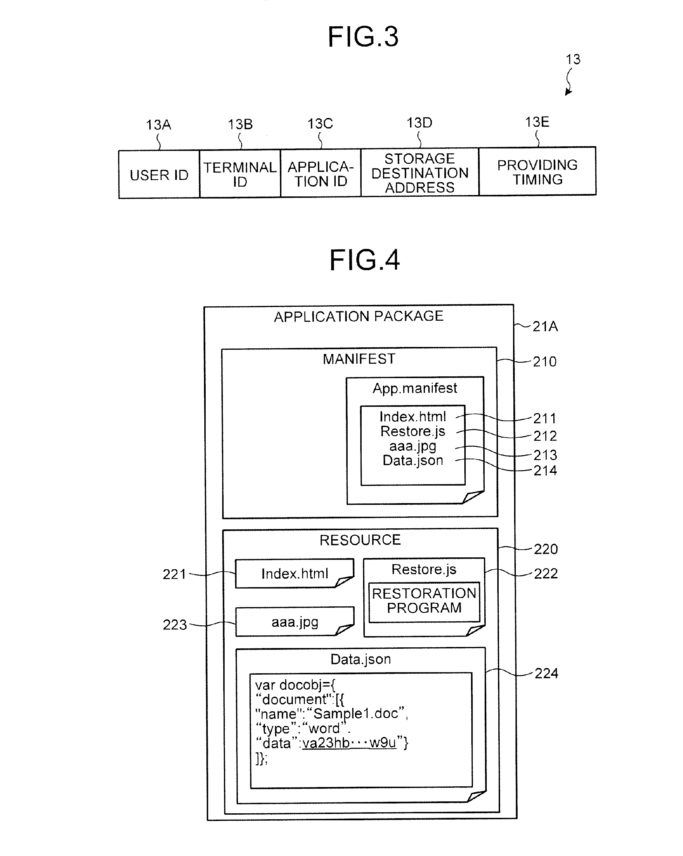

FIG. 3 is a schematic diagram illustrating an example of the table contents stored in an address management unit. The address management unit 13 illustrated in FIG. 3 manages a user ID 13A, a terminal ID 13B, an application ID 13C, a storage destination address 13D, and a providing timing 13E by associating them with each other and dynamically updates the table contents. The user ID 13A is an ID for identifying, for example, a user that has been registered in the web application providing system 1. The terminal ID 13B is an ID for identifying, for example, the communication terminal 4 of a user registered in the web application providing system 1. The application ID 13C is an ID for identifying an web application that is provided to the communication terminal 4. The storage destination address 13D is a storage destination address that is used to manage the resource of the provided web application. The providing timing 13E is a condition timing used when the storage destination address of the web application to be provided to the communication terminal 4 is transmitted to the communication terminal 4 by push transmission.

Various timings can be conceived as the providing timing 13E. The providing timing 13E is a timing at which, for example, an update of a web application is detected by the update monitoring unit 12. The update of the web application also includes, in addition to an update of a program of the web application itself, a content update in which the content is edited by using the web application. Furthermore, when the web application is, for example, an application for browsing a menu that provides an eating place, the providing timing 13E is the timing at which, for example, the communication terminal 4 enters the communication area near the eating place. Furthermore, when the web application is a schoolbook browsing application that provides a schoolbook for a school, the providing timing 13E is the timing at which the communication terminal 4 enters the communication area in the site of the school. Furthermore, when the web application is a reference material distribution application that distributes reference materials for a meeting, the providing timing 13E is the timing at which the communication terminal 4 enters the communication area in the meeting room. Furthermore, when the web application is updated, the providing timing 13E is the timing at which the communication terminal 4 that uses the web application enters a predetermined communication area.

The timing monitoring unit 14 determines, in accordance with the providing timing 13E in the address management unit 13, whether the current timing is the providing timing 13E. When the current timing is the providing timing 13E, the timing monitoring unit 14 acquires, from the address management unit 13, the user ID 13A, the terminal ID 13B, and the storage destination address 13D that are associated with the providing timing 13E. In accordance with the acquired terminal ID 13B, the timing monitoring unit 14 specifies the communication terminal 4 associated with the providing timing. Furthermore, in accordance with the acquired storage destination address 13D, the timing monitoring unit 14 specifies a storage destination of the resource of the web application provided to the communication terminal 4 that is associated with the providing timing. When it is possible to transmit by push transmission to the communication terminal 4 that is specified by the timing monitoring unit 14, the push transmitting unit 15 transmits by push transmission the storage destination address to the communication terminal 4.

Each web server 3 includes an application management unit 21, an application providing unit 22, a content storing unit 23, a storing control unit 24, and a content acquisition unit 25. The application providing unit 22, the storing control unit 24, the content acquisition unit 25, and the like are executed by a processor (not illustrated) in the web server 3. The application management unit 21 manages, for each storage destination address, an application package 21A that stores therein the resource and the manifest of the web application. The application package 21A includes a manifest 210 and a resource 220. FIG. 4 is a schematic diagram illustrating an example of the manifest 210 and the resource 220. The manifest 210 is the list of items contained in the resource 220 of the web application. The manifest 210 includes an Index.html 211 indicating a top page, a Restore.js 212 indicating a restoration program, an aaa.jpg 213 indicating an image file, and a Data.json 214 indicating a container file that contains a content.

The resource 220 contains the content of the resources used for the web application. The resource 220 includes an Index.html 221 that is the top page itself and a Restore.js 222 that is the restoration program itself. Furthermore, the resource 220 includes an aaa.jpg 223 that is the image file itself and a Data.json 224 that is the container file that contains the content. The JavaScript Object Notation (JSON) file is a data file having a data format with which JavaScript programs executed by the web browser can be interpreted. The restoration program is a program that extracts the content from the Data.json file and restores the content in the local storage. The Data.json 224 contains attribute information on the stored content and data on the converted content.

The content acquisition unit 25 acquires edited content in accordance with the upload of the edited content by using the web application on the communication terminal 4 side. Furthermore, the content storing unit 23 stores therein, in the content file format, the edited content of the web application acquired by the content acquisition unit 25. The storing control unit 24 includes a converting unit 24A and a storing unit 24B. The converting unit 24A converts the edited content stored in the content storing unit 23 to a data format, such as a JSON format, that can be interpreted by the restoration program in the resource. The storing unit 24B stores therein the data converted to the JSON format in the container file in the resource, such as the Data.json file. When an application request received from the communication terminal 4 is detected, the application providing unit 22 acquires, from the application management unit 21, the manifest 210 and the resource 220 of the web application for the application request. Furthermore, the application providing unit 22 provides the acquired manifest 210 and the resource 220 of the web application to the communication terminal 4 that executes the application request.

The communication terminal 4 corresponds to, for example, a mobile phone, a smart phone, a personal computer, or a tablet device that has a communication function. The communication terminal 4 includes a communication unit 31, an operating unit 32, a display unit 33, a memory 34, and a CPU 35 such as a processor. The communication unit 31 communicates with another communication terminal 4 or a server via, for example, a communication network. The operating unit 32 inputs various commands. The display unit 33 displays various kinds of information. The memory 34 stores therein various kinds of information. The CPU 35 performs the overall control of the communication terminal 4. The CPU 35 executes software, such as a web browser 40 and a push client 36. The web browser 40 and the push client 36 may also be executed on a different CPU.

The push client 36 includes a push receiving unit 51, an application acquisition unit 52, and a temporary storage 53. The push receiving unit 51 receives, from the push server 2, a storage destination address that contains the resource of the web application related to the providing timing. In accordance with the storage destination address received by the push receiving unit 51, the application acquisition unit 52 requests the resource of the web application from the web server 3. When acquiring the resource of the web application from the web server 3, the application acquisition unit 52 registers the resource of the web application in the temporary storage 53.

The web browser 40 includes a cache synchronizing unit 41, an application cache 42, an application execution unit 43, and a local storage 45. The cache synchronizing unit 41 converts the resource registered in the temporary storage 53 to the data format interpreted by the web browser and caches in the application cache 42. The application execution unit 43 executes the web application in accordance with the resource that is cached in the application cache 42. Furthermore, the application execution unit 43 executes a restoration program (Restore.js) of the resource cached in the application cache 42. By executing the restoration program, the application execution unit 43 restores the content stored in the Data.json file in the resource and stores the restored content in the local storage 45. The cache synchronizing unit 41 may also be arranged outside the web browser.

The web application providing system 1 includes a pull system and a push system. In the pull system, the communication terminal 4 requests, from the push server 2, a storage destination address of the resource of the desired web application. Then, in accordance with the storage destination address acquired from the push server 2, the communication terminal 4 acquires the resource of the web application. Furthermore, as described above, in the push system, the push server 2 provides, in accordance with the providing timing of the web application, the storage destination address of the resource of the web application to the communication terminal 4.

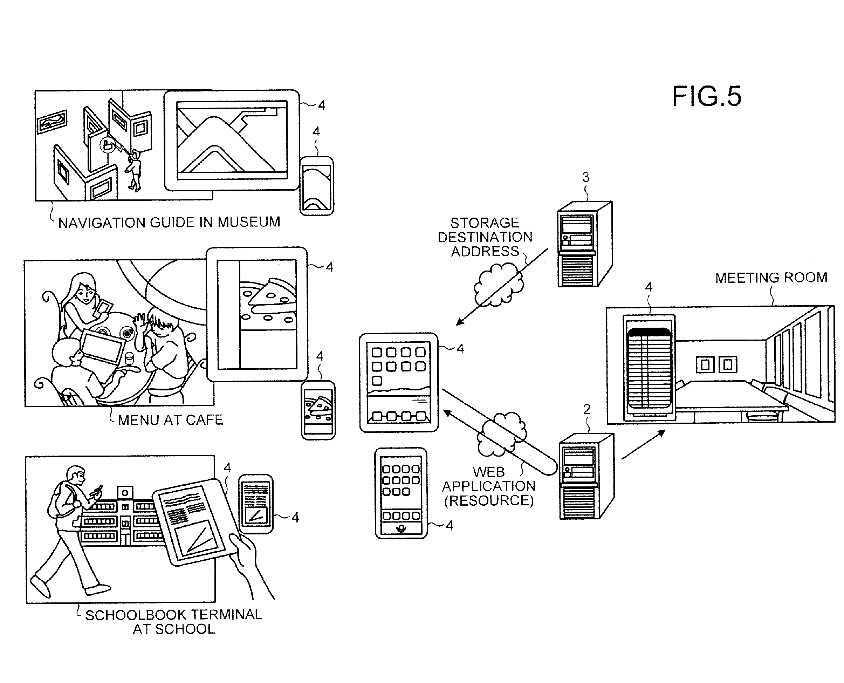

In the following, the operation of the web application providing system 1 according to the first embodiment will be described. FIG. 5 is a schematic diagram illustrating an example of a usage pattern of the web application providing system 1 according to the first embodiment. The web application providing system 1 illustrated in FIG. 5 includes the push server 2, the web server 3, and the communication terminal 4.

As illustrated in FIG. 5, when a user who uses the communication terminal 4 enters a museum, the push server 2 determines the state of entering the museum as the providing timing and transmits by push transmission, to the communication terminal 4, a storage destination address of a resource related to a web application of museum guide navigation. Then, the communication terminal 4 acquires the storage destination address received from the push server 2 and the resource related to the web application of the museum navigation guide received from the web server 3 and caches the resource. Then, in accordance with the cached resource, the communication terminal 4 executes the web application of the museum navigation guide. Accordingly, the user can receive museum guidance with the navigation guide application without performing the acquisition operation of the web application of the museum navigation guide.

Furthermore, when the user who uses the communication terminal 4 is in the vicinity of an eating place, the push server 2 determines the state of being near the eating place as the providing timing and transmits by push transmission, to the communication terminal 4, a storage destination address of the resource related to a web application for browsing the menu of the eating place. Then, the communication terminal 4 acquires, from the web server 3 containing the storage destination address received from the push server 2, the resource related to the web application for browsing the menu and caches it. Then, in accordance with the cached resource, the communication terminal 4 executes the web application for browsing the menu. Accordingly, the user can browse the menu of the eating place with the menu browsing application without performing the acquisition operation of the web application for browsing the menu.

Furthermore, when the user who uses the communication terminal 4 comes to a school, the push server 2 determines the state of coming to the school as the providing timing and transmits by push transmission, to the communication terminal 4, a storage destination address related to a web application for browsing the schoolbook. Then, the communication terminal 4 acquires, from the web server 3 containing the storage destination address received from the push server 2, the resource related to the web application for browsing the schoolbook and caches it. Then, in accordance with the cached resource, the communication terminal 4 executes the web application for browsing the schoolbook. Accordingly, the user can browse the schoolbook with the schoolbook browsing application without performing the acquisition operation of the web application for browsing the schoolbook.

Furthermore, when the user who uses the communication terminal 4 enters a meeting room, the push server 2 determines the state of entering the meeting room as the providing timing and transmits by push transmission, to the communication terminal 4, a storage destination address of the resource related to a web application for browsing the presentation material. Then, the communication terminal 4 acquires, from the web server 3 containing the storage destination address received from the push server 2, the resource of the web application for browsing the presentation material and caches it. Then, in accordance with the cached resource, the communication terminal 4 executes the web application for browsing the presentation material. Accordingly, the user can browse the presentation materials with the material browsing application without performing the acquisition operation of the web application for browsing the presentation material.

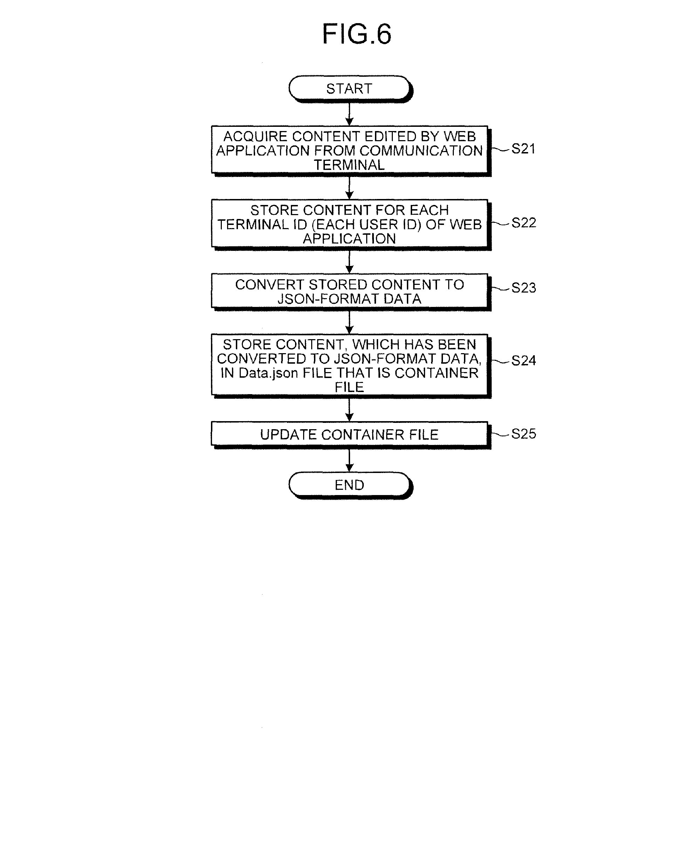

FIG. 6 is a flowchart illustrating a process related to a content update process that is performed by the web server 3. In the content update process illustrated in FIG. 6, when the content edited by the web application is acquired from the communication terminal 4, the content is updated by storing the edited content in the container in the resource of the web application. In FIG. 6, the content acquisition unit 25 in the web server 3 acquires the content edited by the web application from the communication terminal 4 (Step S21). When the content storing unit 23 acquires the edited content, the content storing unit 23 in the web server 3 stores the edited content for each terminal ID or each user ID of the web application (Step S22). The converting unit 24A in the storing control unit 24 in the web server 3 converts the stored content to a data format, such as JSON-format data, that can be interpreted by the restoration program (Step S23).

Furthermore, the storing unit 24B in the storing control unit 24 stores the content, which has been converted to the JSON-format data, in the Data.json file that is the container file in the resource (Step S24). The storing unit 24B replaces the container file in the resource with a new created container file Data.json (Step S25) and then ends the processes illustrated in FIG. 6. Accordingly, the push server 2 recognizes the update of the data in accordance with the state in which updated date information in the Data.json file has been changed.

In the content update process illustrated in FIG. 6, when the web server 3 acquires the content edited by the web application from the communication terminal 4, the web server 3 stores, using a specific data format, the acquired content in the Data.json file in the resource of the web application. Then, when the container file is replaced with a new file, the push server 2 recognizes the update of the data of the web application in accordance with the state in which the updated date information on the data has been changed.

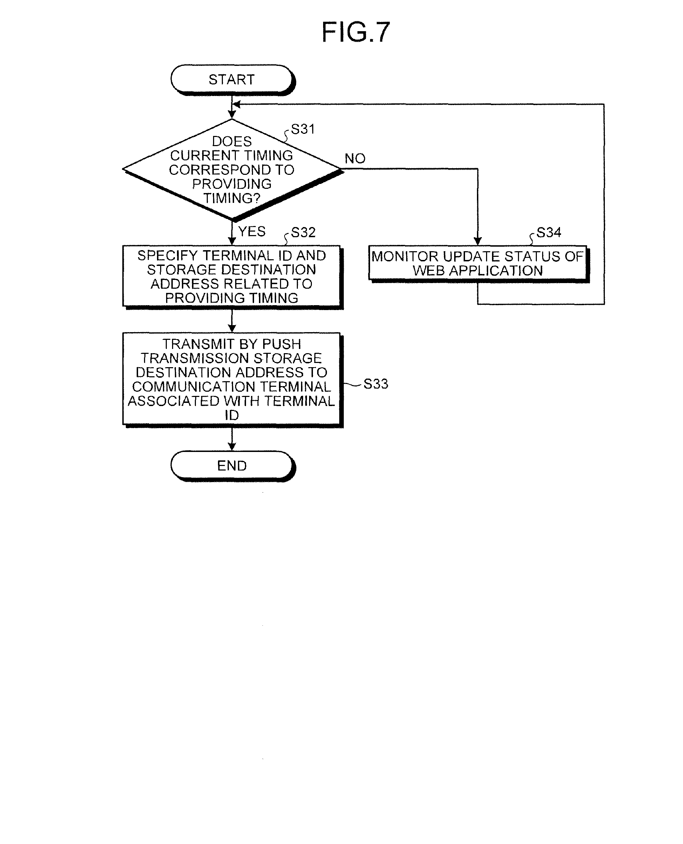

FIG. 7 is a flowchart illustrating a process related to an address providing process that is performed by the push server 2. In the address providing process illustrated in FIG. 7, when the providing timing of the web application is monitored and when the providing timing is detected, the storage destination address of the resource related to the web application that is to be provided to the communication terminal 4 associated with the providing timing is transmitted by push transmission. The timing monitoring unit 14 in the push server 2 in FIG. 7 determines whether the current timing is the providing timing managed by the address management unit 13 (Step S31). When the current timing is the providing timing (Yes at Step S31), the timing monitoring unit 14 specifies, from the address management unit 13, the terminal ID 13B and the storage destination address 13D related to the providing timing (Step S32).

When the push transmitting unit 15 in the push server 2 specifies the terminal ID 13B and the storage destination address 13D, the push transmitting unit 15 transmits, to the communication terminal 4 in the terminal ID 13B, by push transmission the storage destination address 13D (Step S33) and ends the processes illustrated in FIG. 7. Furthermore, the push transmitting unit 15 determines whether the communication terminal 4 of the terminal ID 13B is in the state of being capable of communicating with the push transmitting unit 15. When the communication terminal 4 is in the state of being capable of communicating with the push transmitting unit 15, the push transmitting unit 15 transmits by push transmission the storage destination address 13D to the communication terminal 4. Furthermore, when the current timing is not the providing timing (No at Step S31), the update monitoring unit 12 in the push server 2 monitors the update status of the web application in each web server 3 (Step S34) and then proceeds to Step S31 in order to monitor the providing timing.

In the address providing process illustrated in FIG. 7, when the providing timing of the web application is monitored and when the providing timing is detected, the storage destination address of the resource of the web application that is to be provided to the communication terminal 4 associated with the providing timing is transmitted by push transmission. Accordingly, the communication terminal 4 can recognize the storage destination address of the resource of the web application in accordance with the providing timing of an update of, for example, the web application data.

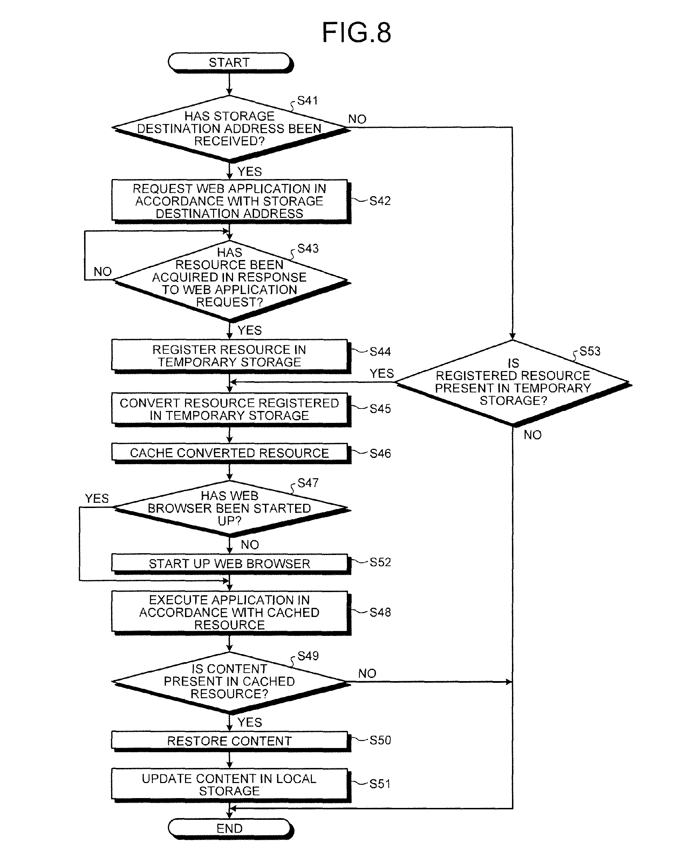

FIG. 8 is a flowchart illustrating a process related to a web application acquisition process that is performed by the communication terminal 4. In the web application acquisition process illustrated in FIG. 8, in accordance with the storage destination address acquired from the push server 2, the resource of the web application is acquired from the web server 3 and the resource is cached in the application cache 42. In FIG. 8, the push receiving unit 51 in the push client 36 in the communication terminal 4 determines whether the storage destination address 13D has been received from the push server 2 (Step S41). When the storage destination address has been received (Yes at Step S41), the application acquisition unit 52 in the push client 36 requests the web application from the web server 3 in accordance with the storage destination address (Step S42). The application acquisition unit 52 determines whether the resource has been acquired in response to the web application request (Step S43).

When the application acquisition unit 52 acquires the resource (Yes at Step S43), the application acquisition unit 52 registers the acquired resource in the temporary storage 53 (Step S44). The cache synchronizing unit 41 in the web browser 40 converts the resource registered in the temporary storage 53 to the data format that can be interpreted by the web browser 40 (Step S45). Furthermore, the cache synchronizing unit 41 caches the converted resource in the application cache 42 (Step S46). The CPU 35 in the communication terminal 4 determines whether the web browser 40 has been started up (Step S47).

When the web browser 40 has been started up (Yes at Step S47), the application execution unit 43 in the web browser 40 executes the web application in accordance with the resource that is cached in the application cache 42 (Step S48). Furthermore, the restoration program that is executed by the web browser 40 determines whether content is present in the resource container (Step S49). When the content is present in the resource container (Yes at Step S49), the restoration program restores the content in the Data.json file contained in the resource (Step S50). The restoration program updates the content by storing the restored content in the local storage 45 (Step S51) and ends the processes illustrated in FIG. 8.

When the application acquisition unit 52 has not received the storage destination address (No at Step S41), the application acquisition unit 52 determines whether the registered resource is present in the temporary storage 53 (Step S53). When the registered resource is present in the temporary storage 53 (Yes at Step S53), the application acquisition unit 52 proceeds to Step S45 in order to convert the resource.

In contrast, when the registered resource is not present in the temporary storage 53 (No at Step S53), the application acquisition unit 52 ends the processes illustrated in FIG. 8. Furthermore, when the content is not present in the resource container (No at Step S49), the restoration program ends the processes illustrated in FIG. 8. furthermore, when the application acquisition unit 52 does not acquire the resource (No at Step S43), the application acquisition unit 52 proceeds to Step S43 in order to determine whether the resource has been acquired. Furthermore, when the web browser 40 has not been started up (No at Step S47), the CPU 35 starts up the web browser 40 (Step S52) and proceeds to Step S48.

In the web application acquisition process illustrated in FIG. 8, in accordance with the storage destination address acquired from the push server 2, the resource of the web application is acquired from the web server 3 and the resource is cached in the application cache 42. Accordingly, the communication terminal 4 can execute the web application in accordance with the cached resource even if it is offline.

In the web application acquisition process, even if the web browser 40 has not been started up, the resource of the web application can be registered in the temporary storage 53. Accordingly, the web application associated with the providing timing can be automatically acquired even if the web browser 40 is not started up.

In the web application acquisition process, the resource registered in the temporary storage 53 is read and then cached in the application cache 42. Accordingly, the web application associated with the providing timing can be automatically acquired.

Furthermore, in the web application acquisition process, when content is present in the resource container that is cached in the application cache 42, the content is restored in accordance with the restoration program stored in the resource and the restored content is stored in the local storage 45. Accordingly, the client can acquire the latest content at the time of execution of the web application even when it is offline.

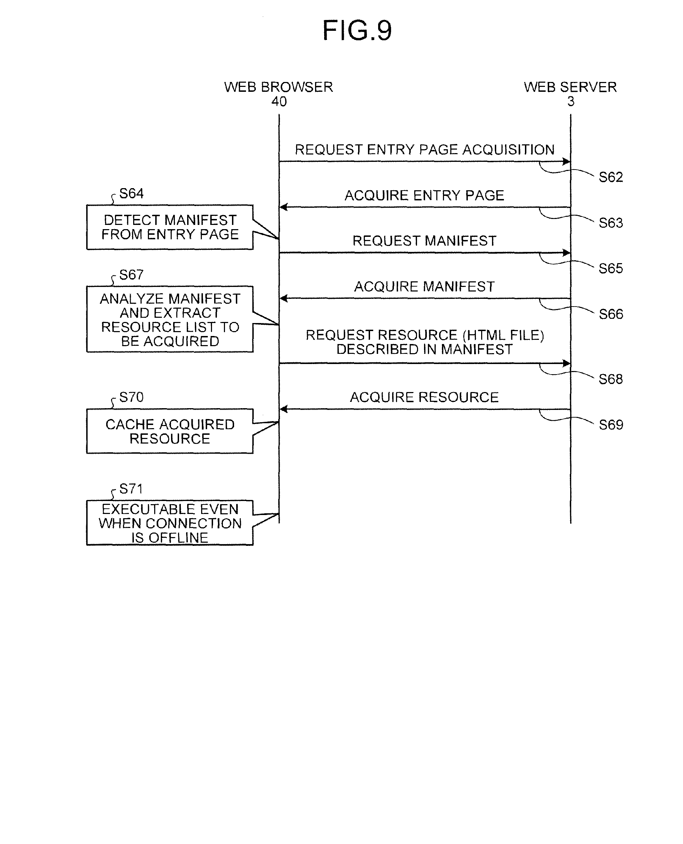

In the following, the operation performed when the web browser 40 in the communication terminal 4 acquires the resource of the web application from the web server 3 will be described. FIG. 9 is a sequence diagram illustrating a process related to a resource acquisition process that takes place between the web browser 40 and the web server 3. The web browser 40 in the communication terminal 4 illustrated in FIG. 9 transmits an entry page acquisition request to the web server 3 (Step S62). When the web server 3 detects the entry page acquisition request, the web server 3 transmits the entry page to the web browser 40 (Step S63). When the web browser 40 acquires the entry page, the web browser 40 detects the manifest contained in the entry page (Step S64). The web browser 40 transmits a manifest acquisition request to the web server 3 in accordance with the manifest (Step S65).

When the web server 3 detects the manifest acquisition request, the web server 3 transmits, to the web browser 40, the manifest 210 in the application package 21A of the web application (Step S66). When the web browser 40 acquires the manifest 210, the web browser 40 analyzes the manifest 210 and extracts a list of resources of the web application to be acquired (Step S67). When the web browser 40 extracts the list of the resource, the web browser 40 transmits an HTML file acquisition request that is described in the manifest to the web server 3 (Step S68). Furthermore, in accordance with the resource acquisition request described in the manifest, the web server 3 transmits the resource to the web browser 40 (Step S69). In the above processes, the web server 3 transmits the resource of the web application to the web browser 40; however, when transmitting the resource next time and subsequently to that time, an updated file, such as content, may also be transmitted. When the resource is acquired, the web browser 40 caches the acquired resource in the application cache 42 (Step S70). The web browser 40 executes the web application in accordance with the cached resource (Step S71).

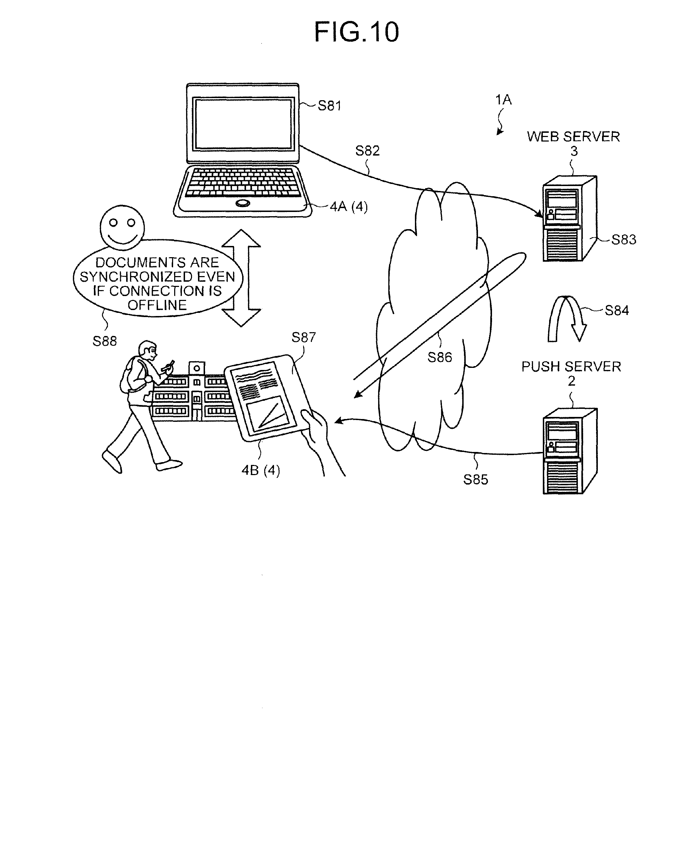

FIG. 10 is a schematic diagram illustrating an example of an embodiment of the web application providing system 1 according to the first embodiment. The same person uses, as the communication terminal 4, the personal computer 4A and the tablet device 4B illustrated in FIG. 10. The personal computer 4A illustrated in FIG. 10 allows the web server 3 to be online using the web browser and acquires, for example, a web application for creating a document from the web server 3. The personal computer 4A creates and edits the content by using the web application (Step S81). The personal computer 4A stores the created and edited content in the local storage 45 and uploads it to the web server 3 (Step S82). The web server 3 stores, in the content storing unit 23, the content that is uploaded from the personal computer 4A by associating the content with the web application (Step S83). Then, the web server 3 stores the content in the container of the resource of the web application. Accordingly, the same content is stored in the web server 3 and the personal computer 4A.

When the push server 2 detects an update of the web application, such as an update of the edited content (Step S84), the push server 2 transmits by push transmission the storage destination address related to the resource of the updated web application to, for example, the tablet device 4B (Step S85). Then, when receiving the storage destination address, the tablet device 4B acquires, from the web server 3 in accordance with the storage destination address, the resource of the updated web application (Step S86). At this stage, the edited content is stored in the container of the resource of the web application.

The tablet device 4B caches the resource of the web application acquired from the web server 3 and executes the web application in accordance with the cached resource (Step S87). Furthermore, the tablet device 4B restores the edited content that is stored in the container and that is a restoration program contained in the cached resource (Step S87). Specifically, the same and the latest data are stored in the local storage 45 in the personal computer 4A and the tablet device 4B (Step S88). Accordingly, the tablet device 4B can locally execute, in accordance with the cached resource, a web application even when it is offline and can edit the latest edited content by using the web application.

In the first embodiment, the edited content is stored in the resource of the web application and the resource is provided to the communication terminal 4, which is on the client side, when the content of the web application is updated. The communication terminal 4 caches the provided resource; executes the web application in accordance with the cached resource; and restores the edited content that is stored in the resource. Accordingly, the client can acquire the latest edited content when executing the web application even if it is offline. Furthermore, because each content stored in each local storage 45 in each communication terminal 4 that uses the web application has the same and the latest content, each communication terminal 4 can edit the latest edited content that is stored in each local storage 45.

Furthermore, in the first embodiment, the web application can provides the resource containing the edited content stored in the client-side communication terminal 4 in accordance with an update of the edited content.

Furthermore, in the first embodiment, a dynamically created content can also be acquired at the same time together with the web application, and furthermore, the subject content can also be acquired when downloading the web application, thus increasing the range of use of the web application.

Furthermore, in the first embodiment, the content is only stored in the container of the resource and the manifest that indicates the list of resources can be used without changing anything, thus enhancing the usability.

Furthermore, in the first embodiment, when the edited content is stored in the resource of the web application, the edited content is converted to the JSON-format data and is stored in the Data.json file; however, the type of formatting and file is not limited thereto. For example, it is also possible to use another format type or another storing file type.

Furthermore, the timing monitoring unit 14 according to the first embodiment monitors, in accordance with the providing timing 13E for each terminal ID 13B in the address management unit 13, the providing timing for each communication terminal 4 that is identified by the terminal ID 13B. However, the timing monitoring unit 14 may also monitor the providing timing 13E of each user ID 13A in the address management unit 13. In such a case, the timing monitoring unit 14 monitors each providing timing 13E of a user identified by the user ID 13A.

Furthermore, in the first embodiment, when a user who uses the communication terminal 4 enters a meeting room, the push server 2 determines the state of entering the meeting room as the providing timing and provides, to the communication terminal 4 in accordance with the providing timing, a storage destination address of the resource related to the web application for browsing the presentation material. Then, in accordance with the storage destination address, the communication terminal 4 acquires the resource related to the web application for browsing the presentation material and caches it. When the confidentiality of the presentation material is taken into consideration, the web application for browsing the presentation material preferably restricts the user's browsing after the user leaves the meeting room. Accordingly, the push server 2 may also include a managing unit that manages, in an associated manner, a terminal ID of the communication terminal 4 that provides a usage forbidden web application, the application ID that identifies the usage forbidden web application, and a usage forbidden time of the usage forbidden web application.

In such a case, when a user who uses the communication terminal 4 leaves the meeting room, the timing monitoring unit 14 in the push server 2 determines the state of leaving the meeting room as the usage forbidden time. In accordance with the usage forbidden time, the timing monitoring unit 14 acquires, from the managing unit, the terminal ID and the application ID associated with the usage forbidden time. In accordance with the acquired terminal ID, the timing monitoring unit 14 specifies an usage forbidden communication terminal 4, and specifies, in accordance with the acquired application ID, the web application of the usage forbidden communication terminal 4. The push transmitting unit 15 notifies, the communication terminal 4, of an usage forbidden request for the usage forbidden web application for, for example, browsing the presentation material. When the usage forbidden request is received, the communication terminal 4 deletes the cached resource of the web application for browsing the presentation material in order to prohibit the execution of the web application. Accordingly, because it is not possible for the user who uses the communication terminal 4 to use the web application for browsing material after he or she leaves the meeting room, the confidentiality of the presentation materials can be ensured.

Furthermore, in the first embodiment, the web browser 40 and the push client 36 are executed by the same CPU 35; however, they may also be executed by the different CPUs.

Furthermore, in the first embodiment, the communication terminal 4 is assumed to be, for example, a mobile phone or a tablet device; therefore, the CPU 35 is always on. However, when the communication terminal 4 is a personal computer or the like, even when the web browser 40 is not started up or even when the power supply of the CPU 35 is not turned on, the power supply of the push client 36 may always be made to turn on in order to receive information from the push server 2.

### [b] Second Embodiment

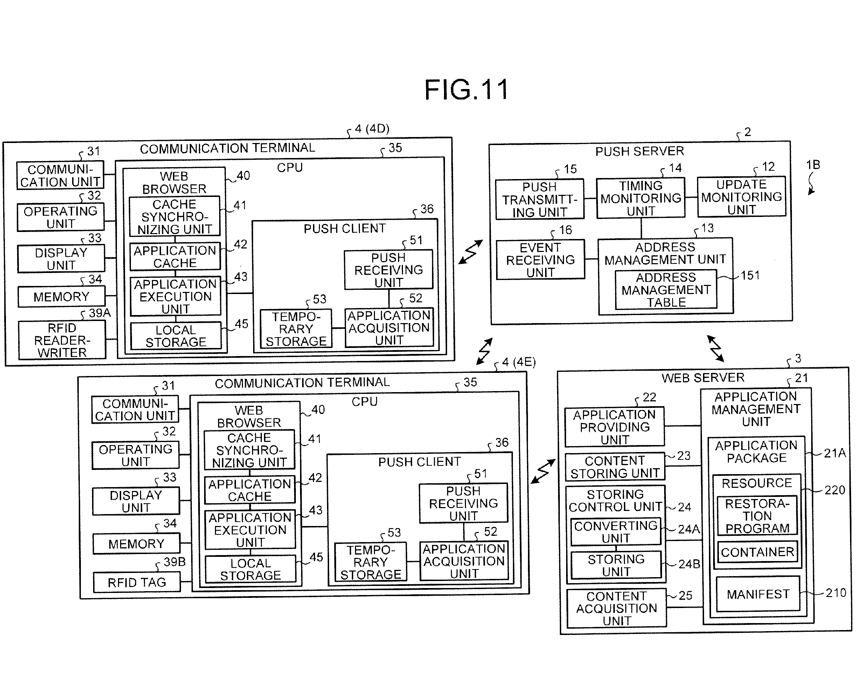

FIG. 11 is a functional block diagram illustrating the configuration of a web application providing system according to a second embodiment. Elements that have the same configuration as those in the web application providing system 1 illustrated in FIG. 1 are assigned the same reference numerals; therefore, a description thereof is omitted. A web application providing system 1B illustrated in FIG. 11 differs from the web application providing system 1 illustrated in FIG. 1 in that a web application that is being executed on a move source communication terminal 4D can also be executed, with a simple operation, on a move destination communication terminal 4E. The move source communication terminal 4D is the communication terminal 4 that is currently executing the web application. In contrast, the move destination communication terminal 4E is the communication terminal 4 that executes the same application as the web application that is currently executed by the move source communication terminal 4D.

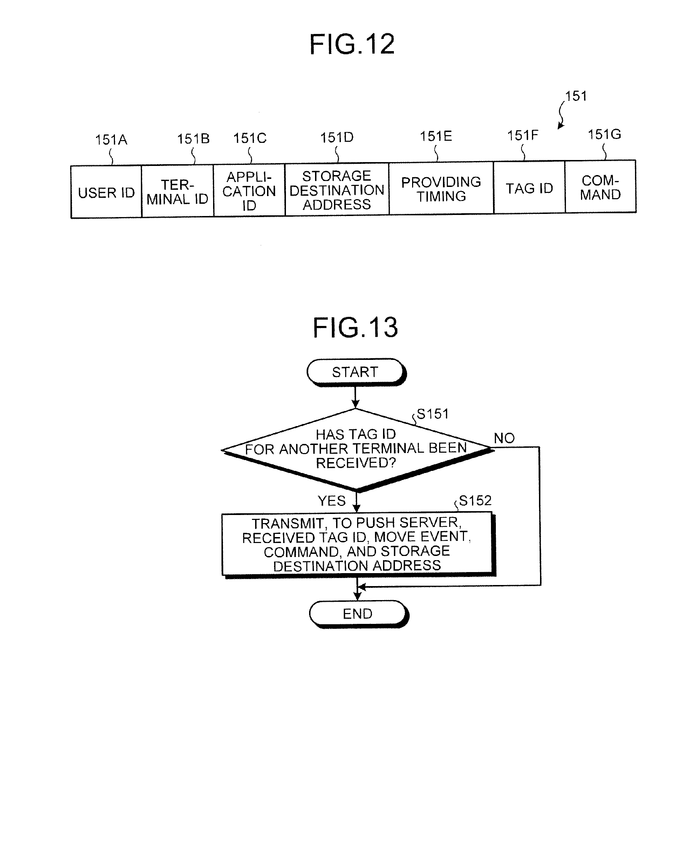

In addition to the update monitoring unit 12, the address management unit 13, the timing monitoring unit 14, and the push transmitting unit 15, the push server 2 illustrated in FIG. 11 includes an event receiving unit 16. The event receiving unit 16 receives event information from the move source communication terminal 4D, which will be described later. The address management unit 13 manages an address management table 151 and dynamically updates and registers the table content of the address management table 151. FIG. 12 is a schematic diagram illustrating an example of the table contents stored in the address management table 151. The address management table 151 illustrated in FIG. 12 manages, in an associated manner, a user ID 151A, a terminal ID 151B, an application ID 151C, a storage destination address 151D, a providing timing 151E, a tag ID 151F, and a command 151G. The tag ID 151F is an ID for identifying an RFID tag 39B, which will be described later, installed in the move destination communication terminal 4E. The command 151G is the execution content of the web application that is specified by the storage destination address 151D. The command 151G includes the execution content of the web application, such as, download and execution, only download, only execution, deletion, and the like.

In addition to the communication unit 31, the operating unit 32, the display unit 33, the memory 34, and the CPU 35, the move source communication terminal 4D includes radio frequency identification (RFID) reader-writer 39A. Furthermore, in addition to the communication unit 31, the operating unit 32, the display unit 33, the memory 34, and the CPU 35, the move destination communication terminal 4E includes an RFID tag 39B. The RFID reader-writer 39A executes the near field radio communication with the RFID tag 39B in a predetermined communication distance.

The RFID reader-writer 39A in the move source communication terminal 4D starts the near field radio communication with the RFID tag 39B in accordance with the application move operation performed by the move destination communication terminal 4E. With the application move operation, an error operation can be prevented by holding the RFID tag 39B over the RFID reader-writer 39A and by performing duplex operation with respect to a specific operation of the display unit 33 or the operating unit 32. When the CPU 35 acquires the tag ID of the RFID tag 39B via the RFID reader-writer 39A, the CPU 35 creates move event information including the tag ID.

The move event information includes a tag ID, a storage destination address, an event content, and a command. The tag ID is an ID for identifying the RFID tag 39B of the move destination communication terminal 4E. The storage destination address is a storage destination address of the resource related to the web application that is also executed by the move destination communication terminal 4E and that is currently running on the move source communication terminal 4D. The event content includes a move event that allows the web application, which is executed by the move source communication terminal 4D, to be also executed by the move destination communication terminal 4E. The command includes the execution content of the web application executed by the move destination communication terminal 4E, such as download and execution, only download, only execution, deletion, and the like.

The communication unit 31 in the move source communication terminal 4D transmits the created move event information to the push server 2. The event receiving unit 16 in the push server 2 receives the move event information from the move source communication terminal 4D. When the address management unit 13 receives the move event information, the address management unit 13 in the push server 2 updates the address management table 151 by changing, to "immediate", the providing timing 151E associated with the terminal ID 151B that is related to the tag ID 151F contained in the move event information. Furthermore, the address management unit 13 updates the address management table 151 by changing the command contained in the move event information to the command 151G associated with the terminal ID 151B.

The timing monitoring unit 14 refers to the providing timing 151E in the address management unit 13 and monitors whether the current timing is the providing timing 151E. When the providing timing 151E is "immediate", the address management unit 13 immediately specifies, from the address management table 151, the terminal ID 151B, the storage destination address 151D, and the command 151G related to the providing timing 151E. The address management unit 13 includes a table that manages a storage destination address related to the resource of the web application for each terminal type and specifies the terminal type of the terminal ID 151B. When the address management unit 13 specifies the terminal type of the terminal ID 151B, the address management unit 13 determines whether the web application of the storage destination address matches the terminal type of the communication terminal 4. When the web application does not match the terminal type, the address management unit 13 specifies the storage destination address 151D that matches the terminal type.

When the terminal ID 151B, the storage destination address 151D, and the command 151G are specified, the push transmitting unit 15 determines whether push transmission is available for the move destination communication terminal 4E associated with the terminal ID 151B. When the push transmission is available, the push transmitting unit 15 transmits by push transmission the storage destination address 151D and the command 151G to the move destination communication terminal 4E associated with the terminal ID 151B.

When the push receiving unit 51 in the move destination communication terminal 4E receives the storage destination address and the command from the push server 2, the push receiving unit 51 requests, in accordance with the storage destination address, a web application from the web server 3. When the application acquisition unit 52 acquires the resource with respect to the web application request, the application acquisition unit 52 registers the acquired resource in the temporary storage 53. Furthermore, the cache synchronizing unit 41 converts the resource registered in the temporary storage 53 to the data format that can be interpreted by the CPU 35. Furthermore, the cache synchronizing unit 41 caches the converted resource in the application cache 42. The application execution unit 43 executes, in accordance with the command received from the push server 2, the web application that is cached in the application cache 42.

Furthermore, the application execution unit 43 executes the restoration program (Restore.js) of the resource that is cached in the application cache 42. The application execution unit 43 restores, by executing the restoration program, the content stored in the Data.json file contained in the resource and stores the restored content in the local storage 45. The cache synchronizing unit 41 may also be arranged outside the web browser.

As described above, in accordance with the application move operation performed with the move source communication terminal 4D, the move destination communication terminal 4E can execute the web application that is the same web application as that performed by the move source communication terminal 4D.

In the following, the operation of the web application providing system 1B according to a second embodiment will be described. FIG. 13 is a flowchart illustrating an example of a process performed by a move source communication terminal 4D. In FIG. 13, the RFID reader-writer 39A in the move source communication terminal 4D determines whether tag ID of the move destination communication terminal 4E has been received in accordance with the near field radio communication using the application move operation with the move destination communication terminal 4E (Step S151). When the CPU 35 in the move source communication terminal 4D receives the tag ID (Yes at Step S151), the CPU 35 transmits, to the push server 2, move event information including the tag ID, the move event, the storage destination address, and the command (Step S152) and ends the processes illustrated in FIG. 13. When the tag ID of the move destination communication terminal 4E is not received (No at Step S151), the RFID reader-writer 39A ends the processes illustrated in FIG. 13.

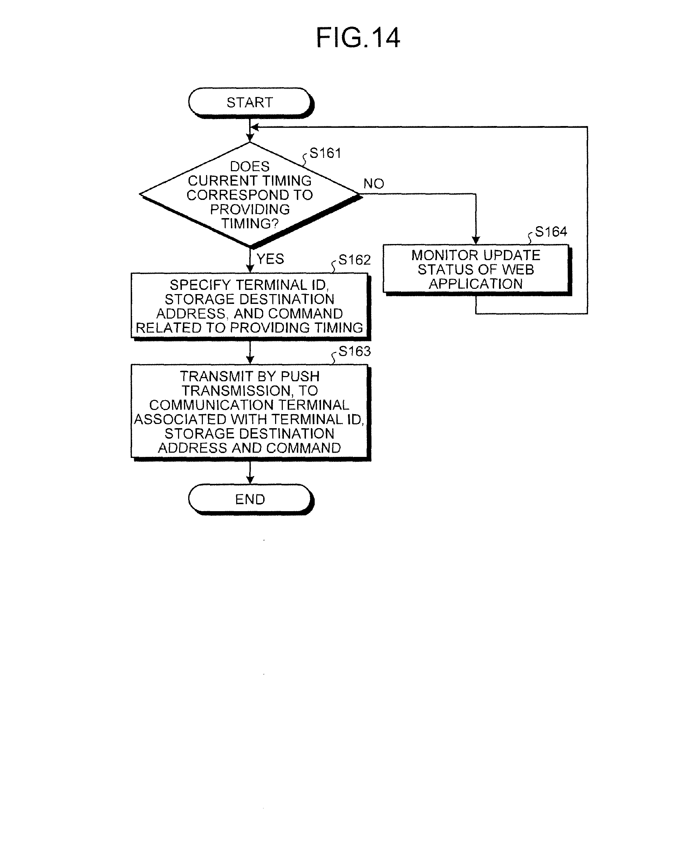

FIG. 14 is a flowchart illustrating an example of a process performed by the push server 2 that is related to an address providing process. In the address providing process illustrated in FIG. 14, when the current state is the providing timing, a storage destination address and a command of the resource related to the web application to be provided is transmitted by push transmission to the communication terminal 4 that is associated with the providing timing. In FIG. 14, the timing monitoring unit 14 in the push server 2 determines whether the current timing is the providing timing that is being managed by the address management unit 13 (Step S161). When the providing timing is "immediate", the timing monitoring unit 14 determines that the current timing is the providing timing. When the current timing is the providing timing (Yes at Step S161), the timing monitoring unit 14 specifies, from the address management unit 13, the terminal ID 151B, the storage destination address 151D, and the command 151G related to the providing timing (Step S162).

When the terminal ID 151B, the storage destination address 151D, and the command 151G are specified, the push transmitting unit 15 in the push server 2 transmits by push transmission, to the communication terminal 4 associated with the terminal ID 151B, the storage destination address 151D and the command 151G (Step S163) and ends the processes illustrated in FIG. 14. The push transmitting unit 15 determines whether the communication is available for the communication terminal 4 associated with the terminal ID 151B. When the communication is available, the push transmitting unit 15 transmits by push transmission, to the communication terminal 4, the storage destination address 151D, and the command 151G. When the current timing is not the providing timing (No at Step S161), the update monitoring unit 12 in the push server 2 monitors the update status of each web application (Step S164) and proceeds to Step S161 in order to monitor the providing timing.

In the address providing process illustrated in FIG. 14, when the current state is the providing timing, a storage destination address and a command of the resource of the web application to be provided are transmitted by push transmission to the move destination communication terminal 4E associated with the providing timing. Accordingly, the move destination communication terminal 4E acquires the storage destination address and the command of the resource of the web application in accordance with the providing timing.

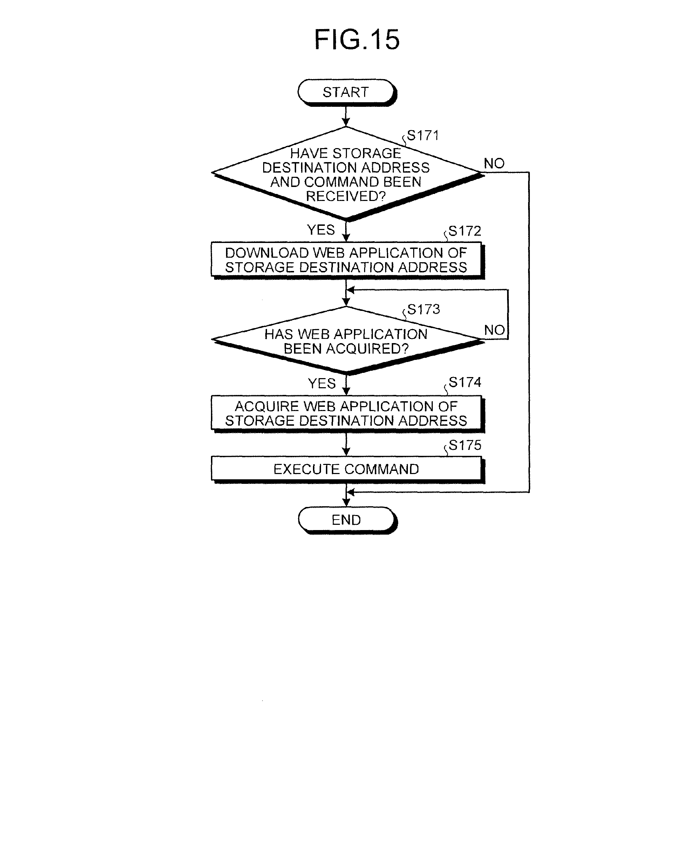

FIG. 15 is a flowchart illustrating an example of a process performed by a move destination communication terminal 4E. In FIG. 15, the push receiving unit 51 in the move destination communication terminal 4E determines whether the storage destination address and the command have been received from the push server 2 (Step S171). When the application acquisition unit 52 in the move destination communication terminal 4E receives the storage destination address and the command (Yes at Step S171), the application acquisition unit 52 downloads the resource of the web application from the web server 3 in accordance with the storage destination address (Step S172).

The application acquisition unit 52 determines whether the acquisition of the resource of the web application is completed (Step S173). When the acquisition of the resource related to the web application is completed (Yes at Step S173), the application acquisition unit 52 registers the resource of the web application in the temporary storage 53 (Step S174). The application execution unit 43 caches the resource of the web application that has been registered in the temporary storage 53 in the application cache 42; executes the cached resource of the web application in accordance with the command received at Step S171 (Step S175); and then ends the processes illustrated in FIG. 15. Furthermore, the application execution unit 43 executes the restoration program of the resource that is cached in the application cache 42. By executing the restoration program, the application execution unit 43 restores the content stored in the Data.json file in the resource and then stores the restored content in the local storage 45.

When the push receiving unit 51 does not receive the storage destination address and the command from the push server 2 (No at Step S171), the push receiving unit 51 ends the processes illustrated in FIG. 15. When the application acquisition unit 52 does not complete the acquisition of the resource of the web application (No at Step S173), the application acquisition unit 52 continue the monitoring operation performed at Step S173.

When the move destination communication terminal 4E receives the storage destination address and the command from the push server 2, the move destination communication terminal 4E acquires the web application and the content in accordance with the storage destination address and executes the web application in accordance with the command. Accordingly, the move destination communication terminal 4E executes the web application that is the same web application as that executed in the move source communication terminal 4D.

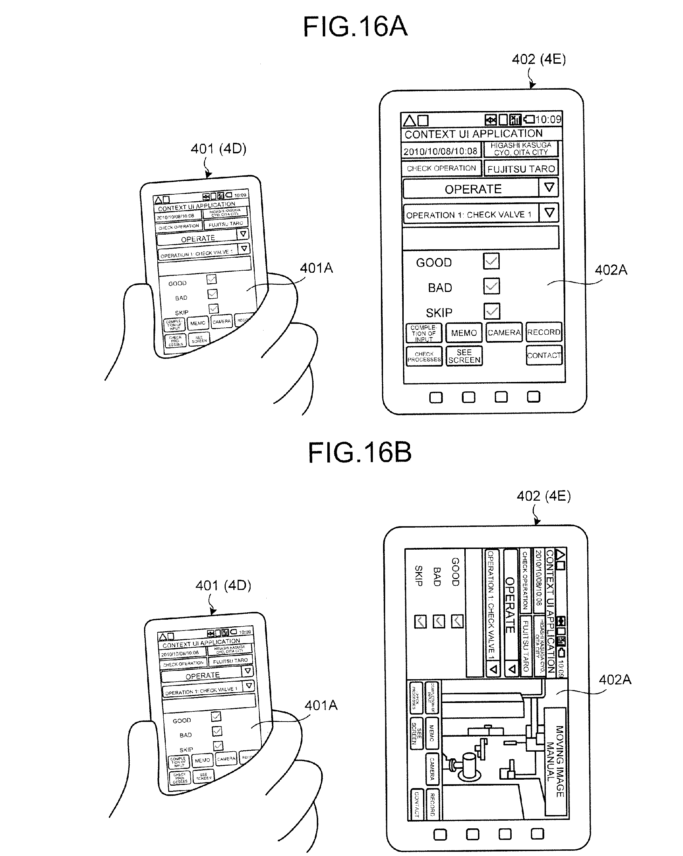

FIG. 16, comprising Figures 16A and 16B, is a schematic diagram illustrating an example of an interlocking operation of the move source communication terminal 4D and the move destination communication terminal 4E. It is assumed that the move source communication terminal 4D is a mobile phone 401 and the move destination communication terminal 4E is a tablet device 402. The mobile phone 401 illustrated in FIG. 16A displays, by executing the web application, an execution screen of the web application on a display unit 401A. Then, in accordance with the application move operation between the tablet device 402 and the mobile phone 401, the RFID reader-writer 39A in the mobile phone 401 acquires the tag ID of the tablet device 402. Furthermore, the mobile phone 401 transmits, to the push server 2, move event information including the acquired tag ID, the storage destination address of the resource of the web application that is being executed in the mobile phone 401, the move event, and the download and execution commands of the web application.

When the address management unit 13 in the push server 2 receives the move event information, by changing the providing timing associated with the terminal ID to "immediate", the address management unit 13 updates the address management table 151 in accordance with the tag ID, the move event, the storage destination address, and the command contained in the move event information. Furthermore, the address management unit 13 updates the address management table 151 by updating the acquired command as the command associated with the terminal ID.

Because the providing timing is "immediate", the address management unit 13 in the push server 2 specifies, from the address management table 151, the terminal ID, the storage destination address, and the command of the providing timing. The push transmitting unit 15 in the push server 2 transmits by push transmission, to the tablet device 402 associated with the terminal ID, the storage destination address and the command. Then, in accordance with the storage destination address, the tablet device 402 acquires, from the web server 3, the web application and the content that are being executed in the mobile phone 401; executes the acquired web application in accordance with the command; and displays the web application that is being executed on a display unit 402A. Accordingly, as illustrated in FIG. 16A, in accordance with the application move operation, the tablet device 402 executes the web application that is the same as that executed in the mobile phone 401 and, furthermore, acquires the same content.

Furthermore, when the mobile phone 401 is placed near the tablet device 402 illustrated in FIG. 16B while the moving image is displayed on the display unit 402A, the screen content displayed on the display unit 401A in the mobile phone 401 is displayed on the screen of the display unit 402A in the tablet device 402. At this time, the display unit 402A in the tablet device 402 can re-arrange the layout of the screen by dividing the screen into two, i.e., a moving image screen that is being used and a display screen of the display unit 401A in the mobile phone 401.

In the second embodiment, for convenience of description, a case has been described in which the RFID reader-writer 39A is built in the move source communication terminal 4D and the RFID tag 39B is built in the move destination communication terminal 4E. However, both the RFID reader-writer 39A and the RFID tag 39B may also be built in each communication terminal 4 (4D, 4E).

Furthermore, in the second embodiment, the RFID communication function is used for the application move operation between the communication terminals 4. However, it is also possible to use near field radio communication, such as near field communication (NFC) communication, between the communication terminals 4 or possible to use a contact sensor method using a contact sensor between the communication terminals 4.

### [c] Third Embodiment

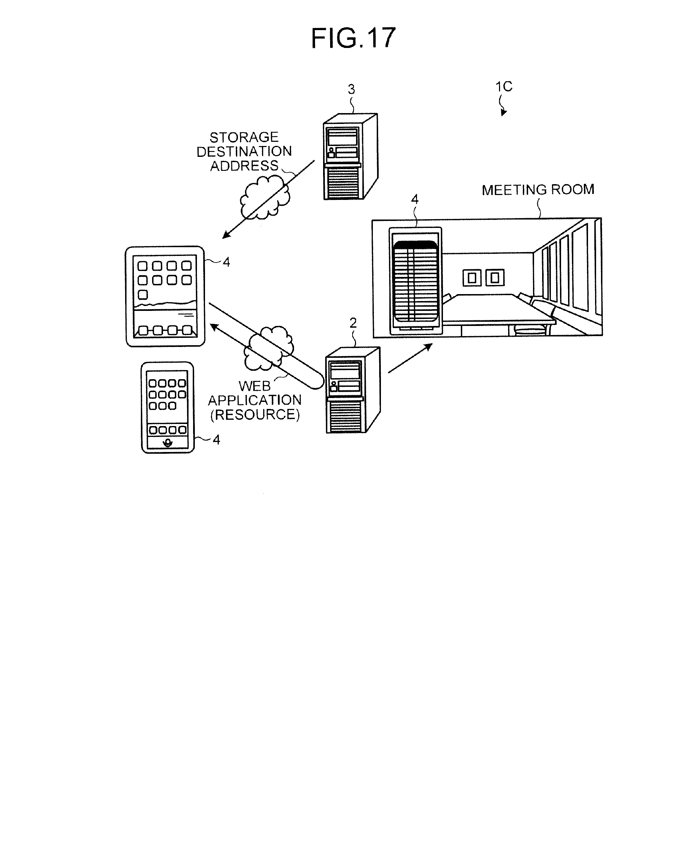

FIG. 17 is a schematic diagram illustrating an example of a usage pattern of a web application providing system according to a third embodiment. Elements that have the same configuration as those in the web application providing system 1B according to the second embodiment are assigned the same reference numerals; therefore, a description thereof is omitted. A web application providing system 1C illustrated in FIG. 17 is assumed to be a web application providing system that is used in, for example, the meeting room.

In the address management unit 13, the providing timing 151E associated with the terminal ID 151B of the communication terminal 4 corresponds to the timing of entering a meeting room by a user who uses the communication terminal 4, whereas the command 151G corresponds to the timing of downloading and executing the web application. The enter timing is a detection timing at which, for example, a user who uses the communication terminal 4 enters a communication region in the meeting room, which is detected by an enter monitoring device arranged at the entrance of the meeting room in accordance with the communication operation between the enter monitoring device and the communication terminal 4. The web application is the web application for browsing a presentation material. The command is the download and the execution of the web application for browsing the presentation material.

Furthermore, in the address management unit 13, the providing timing 151E associated with the identification information on the communication terminal 4 corresponds to the timing of leaving of a user who uses the communication terminal 4, whereas the command 151G corresponds to the timing of deleting the web application. The leaving timing is a detection timing at which, for example, a user who uses the communication terminal 4 re-enters a communication region in the meeting room, which is detected by the enter monitoring device in accordance with the communication operation between the enter monitoring device and the communication terminal 4. The web application is the web application for browsing a presentation material. The command is the deletion of the web application for browsing the presentation material.

When the enter timing at which the communication terminal 4 enters the meeting room is detected, the address management unit 13 in the push server 2 specifies, from the address management table 151, the terminal ID 151B, the storage destination address 151D, and the command 151G of the communication terminal 4. Furthermore, the push transmitting unit 15 in the push server 2 transmits the specified storage destination address and the command to the communication terminal 4. Then, the communication terminal 4 in the meeting room acquires, from the web server 3 in accordance with the storage destination address, the resource of the web application for browsing the presentation material and caches it. Then, the communication terminal 4 executes, in accordance with the command content, the web application for browsing the presentation material and acquires the content from the cached resource.

Furthermore, when the leaving timing at which the communication terminal 4 leaves the meeting room is detected, the timing monitoring unit 14 in the push server 2 specifies, from the address management table 151, the terminal ID 151B, the storage destination address 151D, and the command 151G of the communication terminal 4. Furthermore, the push transmitting unit 15 in the push server 2 transmits the specified storage destination address and the command to the communication terminal 4. Then, the communication terminal 4 outside the meeting room specifies, in accordance with the storage destination address, the web application for browsing the presentation material and deletes, in accordance with the command content, the specified web application and the content from the cache.

In the third embodiment, when a user of the communication terminal 4 enters the meeting room, the push server 2 determines the state of entering the meeting room as the providing timing and provides, to the communication terminal 4, a storage destination address and a command of a web application for browsing a presentation material. Then, the communication terminal 4 in the meeting room acquires, in accordance with the storage destination address, the resource related to a web application for browsing the presentation material; caches it; executes, in accordance with the command, the web application for browsing the presentation material; and acquires the content.

Furthermore, in the third embodiment, when a user of the communication terminal 4 leaves the meeting room, the push server 2 determines the state of leaving the meeting room as the providing timing and provides, to the communication terminal 4, a storage destination address and a command of a web application for browsing the presentation material. Then, the communication terminal 4 outside the meeting room specifies, in accordance with the storage destination address, the resource related to the web application for browsing the presentation material and deletes, in accordance with the command, the web application for browsing the presentation material and the content from the cache. Accordingly, because the user of the communication terminal 4 is not be able to browse the web application for browsing the presentation material and the content after he or she leaves the meeting room, the confidentiality of the presentation material can be ensured.

### [d] Fourth Embodiment

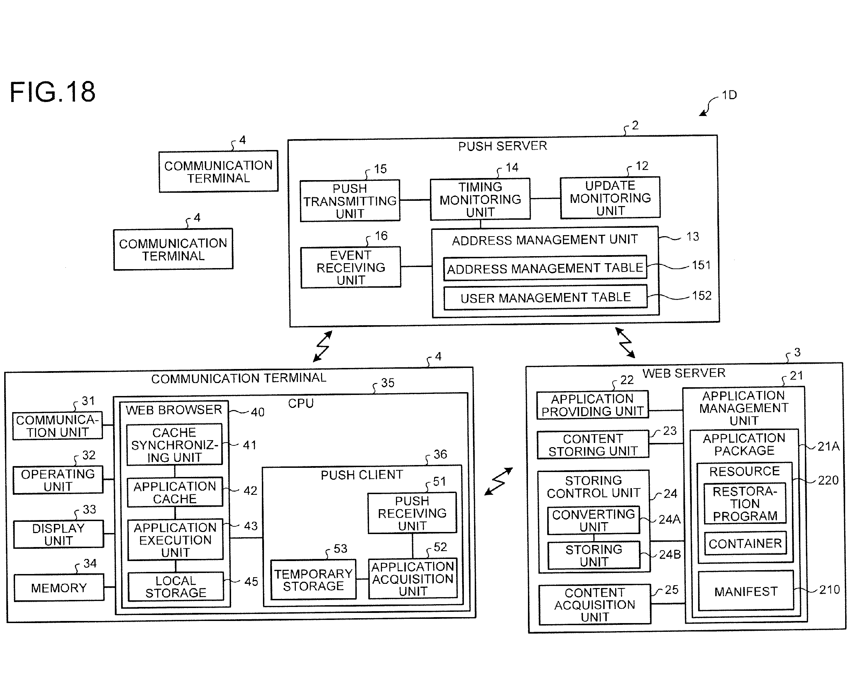

FIG. 18 is a functional block diagram illustrating the configuration of a web application providing system according to a fourth embodiment. Elements that have the same configuration as those in the web application providing system 1 illustrated in FIG. 1 are assigned the same reference numerals; therefore, a description thereof is omitted. A web application providing system 1D illustrated in FIG. 18 differs from the web application providing system 1 illustrated in FIG. 1 in that, when a transmission request for a web application specified by a user is detected, the specified web application and the content is provided to, from among multiple communication terminals 4 belonged to the user, a specific communication terminal 4 having a high possibility of currently being used by the user.

In addition to the update monitoring unit 12, the address management unit 13, the timing monitoring unit 14, and the push transmitting unit 15, the push server 2 illustrated in FIG. 18 includes the event receiving unit 16. The event receiving unit 16 receives event information from the communication terminal 4. Furthermore, the event information includes, for example, a user ID, a storage destination address, an event content, and a command. The user ID is an ID of a user who provides a web application. The storage destination address is a storage destination of the resource related to the web application to be provided. The event content is an event in response to the transmission (delivery) request for the web application. The command is the content of the execution of the web application to be provided.

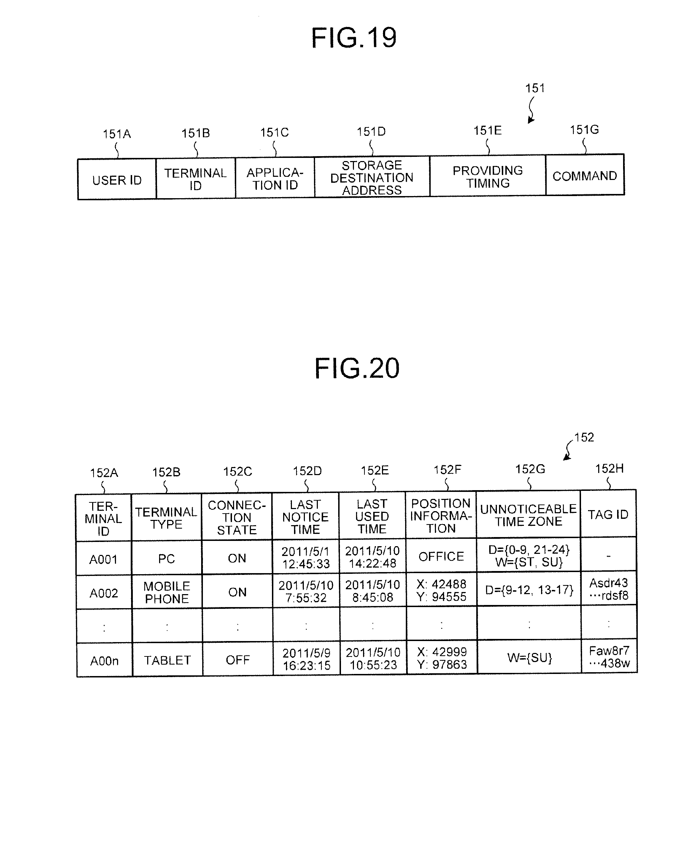

Furthermore, the address management unit 13 manages the address management table 151 and a user management table 152 and dynamically updates and registers the table contents of the address management table 151 and the user management table 152. Furthermore, the address management unit 13 refers to the table contents of the address management table 151 and the user management table 152 to execute various determination operations. FIG. 19 is a schematic diagram illustrating an example of the table contents stored in the address management table 151. In addition to the user ID 151A, the terminal ID 151B, the application ID 151C, the storage destination address 151D, and the providing timing 151E, the address management table 151 illustrated in FIG. 19 manages the command 151G in an associated manner. The command 151G is the execution content of the web application that is specified by the storage destination address 151D.

FIG. 20 is a schematic diagram illustrating an example of the table contents stored in the user management table 152. The user management table 152 illustrated in FIG. 20 manages, for each user, a management list related to the communication terminal 4 belonged to the user. The management list stores therein, in an associated manner, a terminal ID 152A, a terminal type 152B, a connection state 152C, a last notice time 152D, a last used time 152E, a position information 152F, an unnoticeable time zone 152G, and a tag ID 152H. The terminal ID 152A is an ID for identifying the communication terminal 4. The terminal type 152B is the type of communication terminal 4, such as, a PC, a mobile phone, or a tablet device. The connection state 152C indicates whether the communication terminal 4 is available for communicating with the push server 2. When the connection state 152C is "ON", the communication terminal 4 is available for communicating with the push server 2. When the connection state 152C is "OFF", the communication terminal 4 is unavailable for communicating with the push server 2.

Furthermore, the address management unit 13 manages an attribute information table (not illustrated) that stores therein attribute information on each web application; recognizes, by referring to the attribute information table, the terminal type or a place associated with each web application or a storage destination address of the resource related to that web application.

The last notice time 152D is the time at which the push server 2 communicates with the communication terminal 4 last time. The last used time 152E is the time at which a user uses the communication terminal 4 last time. In addition to detecting the state of a network, the last used time 152E performs the determination in accordance with the information contained in a sensor included in various devices in the communication terminal 4 or information contained in an external sensor. For example, when the communication terminal 4 is a personal computer, the last used time is determined by detecting an input via a keyboard of the personal computer arranged in the push server 2. Furthermore, for example, when the communication terminal 4 is a mobile phone, the last used time of the mobile phone is determined, in accordance with collection results, by collecting information acquired by a vibration sensor or an acceleration sensor arranged in the mobile phone in the push server 2. A method for determining the last used time can appropriately be changed.

The position information 152F is position information on, for example, the position coordinates or a location name of the communication terminal 4 obtained using a global positioning system (GPS) function or a communication module of the communication terminal 4. The unnoticeable time zone 152G is the time zone during which notification of a web application set by a user is not delivered. In FIG. 20, "D={0-9, 21-24}, W={ST, SU}" means the communication is "unavailable from 0:00 to 9:00 and 21:00 to 24:00 every day and unavailable all day Saturday and Sunday". The tag ID 152H is an ID for identifying the RFID tag that is built in the communication terminal 4.

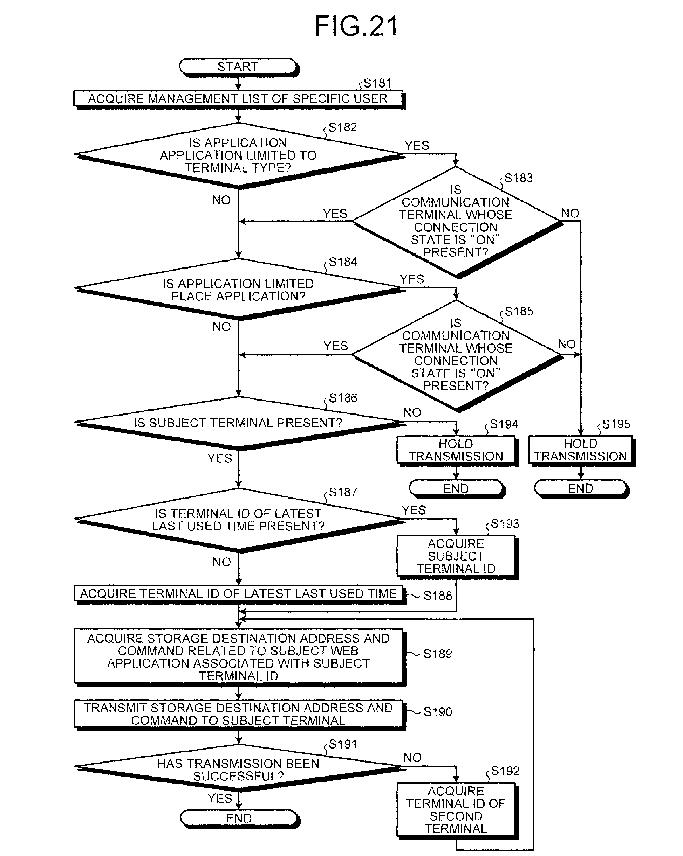

In the following, the operation of the web application providing system 1D according to a fourth embodiment will be described. FIG. 21 is a flowchart illustrating a process related to an address providing process specified by a user that is performed by the push server 2. In the address providing process illustrated in FIG. 21, when a transmission request for a web application with respect to a user is detected, from among multiple communication terminals 4 belonged to the user, the storage destination address and the command related to the resource of the web application is provided to the communication terminal 4 having a high possibility of currently being used by the user.

In FIG. 21, when a transmission request for a web application with respect to a specific user is received, the address management unit 13 in the push server 2 acquires the management list of the specific user from the user management table 152 (Step S181). When the management list of the specific user is acquired, in accordance with the terminal type 152B contained in the management list and the attribute information table used for the web application, the address management unit 13 determines whether the specific web application is an application limited to the terminal type (Step S182). The application limited to the terminal type mentioned here means the web application that can only be executed by the communication terminal 4 having the specific terminal type.

When the specified web application is a limited terminal type application (Yes at Step S182), the address management unit 13 determines, by referring to the connection state 152C in the management list, whether there is the communication terminal 4 whose connection state is "ON" (Step S183). When the communication terminal 4 whose connection state is "ON" is present (Yes at Step S183), the address management unit 13 determines that the communication terminal 4 can execute the specified web application. Furthermore, in accordance with the position information 152F in the management list and the attribute information table used for the web application, the address management unit 13 determines whether the specified web application is a limited place application (Step S184). The limited place application is the web application that is only executed at a specific place. When the specified web application is the limited place application (Yes at Step S184), the address management unit 13 determines, by referring to the connection state 152C in the management list, whether there is the communication terminal 4 whose connection state is "ON" (Step S185).

Furthermore, when the communication terminal 4 whose connection state is "ON" is present (Yes at Step S185), the address management unit 13 determines that the specified web application is the communication terminal 4 that is in an executable place. Furthermore, the address management unit 13 determines whether the communication terminal 4 that provides the specified web application is present (Step S186). The communication terminals 4 may also includes the communication terminal 4 that can execute the specified web application in which, for example, the condition for the unnoticeable time zone 152G is reset. When the subject communication terminal 4 is present (Yes at Step S186), the address management unit 13 determines, by referring to the last used time 152E in the management list, whether a terminal ID of the latest last used time is present in the terminal ID of the subject communication terminal 4 (Step S187).

When the terminal ID of the latest last used time is not present (No at Step S187), the address management unit 13 acquires, by referring to the last notice time 152D in the management list, the terminal ID of the latest last notice time in the terminal ID of the subject communication terminal 4 (Step S188). When the terminal ID of the latest last notice time is acquired, the address management unit 13 acquires, from the address management table 151, the storage destination address and the command related to the subject web application associated with the subject terminal ID (Step S189).

When the storage destination address and the command related to the subject web application that is associated with the terminal ID, the push transmitting unit 15 transmits the storage destination address and the command to the communication terminal 4 associated with the terminal ID (Step S190). The push transmitting unit 15 determines whether the transmission of the storage destination address and the command is successful at Step S190 (Step S191). When the transmission of the storage destination address and the command is successful (Yes at Step S191), the push transmitting unit 15 ends the processes illustrated in FIG. 21.

When the transmission of the storage destination address and the command is not successful (No at Step S191), from among the subject communication terminals 4, the address management unit 13 acquires the terminal ID of the second latest last used time or the last notice time (Step S192). Furthermore, the address management unit 13 proceeds to Step S189 in order to acquire the storage destination address and the command associated with the terminal ID.

Furthermore, when the terminal ID of the latest last used time is present (Yes at Step S187), the address management unit 13 acquires the subject terminal ID from the address management table 151 (Step S193). Furthermore, the address management unit 13 proceeds to Step S189 in order to acquire the storage destination address and the command associated with the terminal ID.

When the subject communication terminal 4 is not present (No at Step S186), the address management unit 13 holds the transmission of the storage destination address and the command related to the subject web application (Step S194) and ends the processes illustrated in FIG. 21. When the address management unit 13 holds the transmission, the push transmitting unit 15 re-transmits the storage destination address and the command related to the web application to the subject communication terminal 4 when the communication terminal 4 becomes the connection state. Furthermore, when the specified web application is not the limited terminal type application (No at Step S182), the address management unit 13 proceeds to Step S184 in order to determine whether the web application is specified limited place application.

Furthermore, when there is no communication terminal 4 whose connection state is "ON" (No at Step S183 and No at Step S185), the address management unit 13 holds the transmission of the storage destination address and the command related to the subject web application (Step S195) and ends the processes illustrated in FIG. 21. When the address management unit 13 holds the transmission, the push transmitting unit 15 re-transmits the storage destination address and the command related to the web application to the subject communication terminal 4 when the subject communication terminal 4 becomes the connection state.

In the processes illustrated in FIG. 21, when the push server 2 receives the transmission request for the specified web application with respect to a user, from among multiple communication terminals 4 belonged to the user who specifies the web application, the push server 2 acquires the terminal ID of the communication terminal 4 that has a high possibility of currently being used by a user and that uses the specified web application. Furthermore, the push server 2 transmits, to the communication terminal 4 having the acquired terminal ID, the storage destination address and the command related to the specified. Accordingly, from among the multiple communication terminal 4 belonged to the user that specifies the web application, the push server 2 can notify the communication terminal 4 having a high possibility of currently being used by the subject user of the storage destination address and the command related to the specified web application.

Furthermore, from among the multiple communication terminal 4 belonged to the user that specifies the web application, the push server 2 transmits the storage destination address and the command related to the specified web application to the communication terminal 4 that has a high possibility of currently being used and that is associated with the limited terminal type application. With the push server 2, when the communication terminal 4 that has a high possibility of currently being used is a personal computer, it is possible to avoid a case in which, even though the web application is only for mobile phones, a storage destination address of a web application only for a mobile phone is transmitted to the personal computer.

Furthermore, from among the multiple communication terminal 4 belonged to the user that specifies the web application, the push server 2 transmits the storage destination address and the command related to the specified web application to the communication terminal 4 that has a high possibility of currently being used by a user and that is associated with the limited place application. With the push server 2, it is possible to avoid a case in which a storage destination address of a web application for browsing a confidential document is transmitted to the communication terminal 4 having a high possibility of currently being used, i.e., a home personal computer outside the office, even though the web application is used for browsing a confidential document that is only for office use.

When the communication terminal 4 receives the storage destination address and the command from the push server 2, the communication terminal 4 acquires, from the web server 3, the resource of the web application specified by the storage destination address and caches the resource in the application cache 42. Furthermore, in accordance with the command received from the push server 2, the communication terminal 4 executes the web application cached in the application cache 42. Furthermore, by executing the restoration program of the resource that is cached in the application cache 42, the communication terminal 4 restores the content and stores the content in the local storage 45. Accordingly, a user of the communication terminal 4 can acquire the specified web application as well as the content.

In the fourth embodiment, when the push server 2 receives a transmission request for the web application specified by a user, from among the multiple communication terminal 4 belonged to a user that specifies the web application, the push server 2 acquires the terminal ID of the communication terminal 4 that has a high possibility of currently being used and that is limited to the terminal type or a place. Furthermore, the push server 2 transmits the storage destination address and the command of the specified web application to the communication terminal 4 having the acquired terminal ID. Accordingly, from among the multiple communication terminals 4 belonged to the user who specifies the web application, the push server 2 can notify the communication terminal 4 having a high possibility of currently being used by the user of the storage destination address and the command related to the specified web application.

For example, a system is assumed in which, by using a web application for circular memo approval, each user checks the content of the circular memo on a user's communication terminal 4 and approves the content of the circular memo. In such a case, the communication terminal 4 of each user needs, in addition to the web application for the circular memo approval, the content of the circular memo. Accordingly, each user transmits a transmission request for the specified circular memo approval web application to the push server 2. When the push server 2 receives the transmission request, from among the multiple communication terminals 4 belonged to the user, the push server 2 acquires the terminal ID of the communication terminal 4 having a high possibility of currently being used. then, the push server 2 transmits the storage destination address and the command of the web application for the circular memo approval to the communication terminal 4 having the acquired terminal ID. In the storage destination address of the web server 3, the content of the circular memo is contained in the resource of the web application for the circular memo approval. Accordingly, in accordance with the storage destination address, the communication terminal 4 acquires the resource of the web application for the circular memo approval from the web server 3; executes, in accordance with the command, the acquired web application for the circular memo approval; and also acquires the content thereof. Accordingly, by using the web application for the circular memo approval in the user's communication terminal 4, each user can check the content of the circular memo and approves the circular memo.

In the fourth embodiment, the push transmitting unit 15 transmits the storage destination address and the command of the specified web application to the communication terminal 4 that satisfies all of the conditions, i.e., the limited terminal type application, the limited place type application, the connection state, the last notice time, the last used time, and the unnoticeable time zone. However, the push transmitting unit 15 may also transmit the storage destination address and the command of the specified web application to the communication terminal 4 that satisfies some conditions mentioned above. The conditions can appropriately be selected.

Furthermore, in the fourth embodiment, when the push server 2 receives a transmission request for the web application specified by a user, from among the multiple communication terminals 4 belonged to the user who specifies the web application, the push server 2 transmits the storage destination address and the command to the communication terminal 4 that has a high possibility of currently being used. However, the number of communication terminals 4 that have a high possibility of currently being used is not limited to one. The push server 2 may also transmits the storage destination address and the command to multiple communication terminals 4. Furthermore, the push server 2 transmits the storage destination address and the command to the communication terminal 4 having a high possibility of currently being used; however, the configuration is not limited thereto. For example, the push server 2 may also transmit the storage destination address and the command to all of the communication terminals 4 belonged to the user.

The components of each unit illustrated in the drawings are not always physically configured as illustrated in the drawings. In other words, the specific shape of a separate or integrated unit is not limited to the drawings; however, all or part of the unit can be configured by functionally or physically separating or integrating any of the units depending on various loads or use conditions.

Furthermore, all or any part of the processing functions performed by each unit may also be executed by a central processing unit (CPU) (or a microcomputer, such as a micro processing unit (MPU) or a micro controller unit (MCU)). Furthermore, all or any part of the processing functions may also be executed by programs analyzed and executed by the CPU (or the microcomputer, such as the MPU or the MCU) or executed by hardware by wired logic.

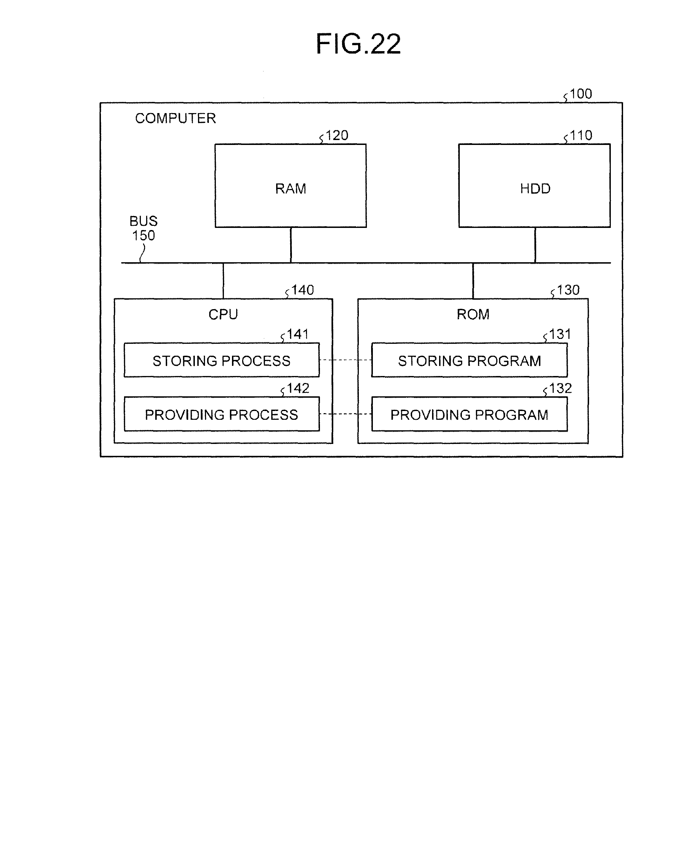

Various kinds of processes described in the above embodiments can be implemented by programs prepared in advance and executed by a computer. Accordingly, in the following, a computer that executes programs having the same function as those described in the embodiments described above will be described as an example with reference to FIG. 22. FIG. 22 block diagram illustrating a computer that executes an application providing program.

As illustrated in FIG. 22, a computer 100 that executes an application providing program includes a hard disk drive (HDD) 110, a random access memory (RAM) 120, a read only memory (ROM) 130, and a CPU 140, which are connected via a bus 150.

The ROM 130 or the HDD 110 previously stores therein an application providing program having the same function as that performed by the units described in the embodiments described above. Furthermore, instead of the ROM 130 and the HDD 110, computer-readable recording medium may also stores therein the application providing program using a drive (not illustrated). The recording medium may be a portable recording medium, such as a CD-ROM, a DVD disk, and a USB memory or a semiconductor memory, such as a flash memory. As illustrated in FIG. 22, the application providing programs are a storing program 131 and a providing program 132. The storing program 131 and the providing program 132 may appropriately be integrated or separate in the same manner as the components of the web server 3 illustrated in FIG. 1.

Then, the CPU 140 reads and executes the storing program 131 and the providing program 132 from the ROM 130. Then, as illustrated in FIG. 22, the programs 131 and 132 functions as a storing process 141 and a providing process 142.

When the CPU 140 detects a content edited by a web application executed by the communication terminal 4, the CPU 140 stores the edited content in the resource of the web application. When the CPU 140 detects, from the communication terminal 4, an application request for a web application, the CPU 140 provides the resource of the web application to the communication terminal 4 that issues the application request. Accordingly, the communication terminal 4, i.e., the client, can acquire the latest edited content when the communication terminal 4 executes the web application even when it is offline.

With the system embodying the present invention, an advantage is provided in that a client can acquire the latest edited content when the client executes a web application even when the client is offline.

## Claims

1. An application providing system (1) comprising:
a communication device (4) that includes a processor (35); and
an application providing device (3) that includes a processor (22,24) and that provides a resource of a web application to the communication device (4), wherein
when the processor (22,24) in the application providing device (3) detects a content that is edited by the web application executed by the communication device (4), the processor (22,24) in the application providing device (3) stores the edited content in the resource of the web application, and, when the processor (22,24) in the application providing device (3) detects, from the communication device (4), an application request for the resource of the web application, the processor (22,24) in the application providing device (3) provides the resource of the web application to the communication device (4) that executes the application request, and
when the processor (35) in the communication device (4) receives the resource of the web application from the application providing device (3), the processor (35) in the communication device (4) temporally stores the resource, synchronizes the stored resource with a cache in a web browser, executes the web application in accordance with the cached resource, and restores the content stored in the resource in accordance with the cached resource.

2. The application providing system (1) according to claim 1, wherein, in a process for storing the edited content in the resource, the processor (24) in the application providing device (3) converts the edited content to a transfer file and stores the content that is converted to the transfer file, in resource information in the web application.

3. The application providing system according to claim 1 or 2, wherein, when the processor (52) in the communication device (4) receives, in accordance with an update of the content of the web application, a storage destination address of the web application that is related to an update of the content, the processor in the communication device executes, on the basis of the storage destination address, the application request for the resource of the web application.

4. The application providing system (1) according to claim 1 or 2, wherein
when the processor (35) in the communication device (4) receives, in accordance with a transmission request for the web application with respect to the communication device (4), the storage destination address and a command of the web application, the processor (35) in the communication device (4) executes, on the basis of the storage destination address, the application request for the resource of the web application for the storage destination address, and
when the processor (35) in the communication device (4) receives the resource of the web application from the application providing device (3), the processor (35) in the communication device (4) temporally stores the resource, synchronizes the stored resource with the cache in the web browser, executes the web application in accordance with the cached resource and the command, and restores the content stored in the resource in accordance with the cached resource.

5. The application providing device (3) according to any of claims 1 to 4, comprising:
a storing control unit (24) that stores the edited content in the resource of the web application when the edited content is detected in the web application executed by the communication device (4); and
a providing unit (22) that provides the resource of the web application to the communication device (4) that executes the application request when the application request for the web application is detected from the communication device (4).

6. The communication device (4) according to any of claims 1 to 5, comprising:
a cache (42) that caches a resource when the resource of the web application is received from the application providing device (3) that provides the resource of the web application; and
an application execution unit (43) that executes the web application in accordance with the resource that is cached in the cache (42) and that restores a content stored in the resource in accordance with the resource that is cached in the cache (42).

7. An application providing method used in an application providing system (1) that includes a communication device (4) and an application providing device (3) that provides a resource of a web application to the communication device (4), the application providing method comprising:
storing, by the application providing device (3), a content edited in the resource of the web application when the edited content of the web application that is executed by the communication device (4) is detected;
providing, by the application providing device (3), the resource of the web application to the communication device (4) that executes an application request when the application request for the resource of the web application is detected from the communication device (4);
storing temporarily, by the communication device (4), the resource when the resource of the web application is received from the application providing device (3);
synchronizing, by the communication device (4), the stored resource with a cache in a web browser;
executing, by the communication device (4), the web application in accordance with the cached resource; and
restoring, by the communication device (4), the content stored in the resource in accordance with the cached resource.

8. An application providing program causing a computer (100) to execute a process comprising:
storing, when a content edited by a web application executed by a communication device is detected, the edited content in a resource of a web application; and
providing, when an application request for the web application is detected from the communication device, the resource of the web application to the communication device that executes the application request.
